# DEMANDE DE BREVET EUROPEEN

(11) **EP 0 526 430 A1**
(43) Date de publication de la demande: **03.02.1993**
(21) Numéro de dépôt: 92830411.2
(22) Date de dépôt: 23.07.1992
(51) Int. Cl.: H02G 1/12

(54) **Outil pour enlever la gaine externe des câbles électriques**

(30) Priorité: 24.07.1991 IT FI910185
(71) Demandeur: MAREL S.r.l., I-50011 Antella - Bagno A Ripoli (Firenze) (IT)
(72) Inventeur: Marzocchini, Alessandro, I-50011 Bagno a Ripoli (Firenze) (IT)
(74) Mandataire: Martini, Lazzaro

(57) **Abrégé**

Pour enlever la gaine externe des câbles électriques, on utilise un outil comprenant:
- un manche (1) avec poignée;
- un levier (2) à deux bras (20,21) articulé sur ledit manche (1), avec une extrémité libre qui dépasse vers le bas du manche (1) et qui a une forme de berceau pour délimiter, avec le manche (1), une bouche (10) dans laquelle faire passer transversalement un câble (7) à traiter et avec l'autre extrémité libre qui dépasse vers le haut du manche pour être actionnée avec le pouce de la main qui empoigne l'outil;
- un ressort (4) qui coopère avec le levier (2) de manière à fermer ladite bouche (10);
- une pointe coupante (5) réglable en profondeur par rapport au câble (7) logé dans la bouche (10) pour couper sa gaine externe (70) le long de sa circonférence, en faisant tourner le manche (1) autour du câble (7) maintenu immobile manuellement. Ledit manche (1) est un des bras d'une pince (8) du type "pince à dénuder" ou "pince à sertir".

## Description

La présente invention concerne un outil pour enlever la gaine externe des câbles électriques à un seul conducteur ou avec plus conducteurs isolés individuellement.

Il est connu d'utiliser un outil, communément appelé "pince à dénuder", pour enlever la gaine isolante des conducteurs électriques, lequel est constitué par une pince dont les mâchoires sont munies de plusieurs encoches arrondies avec bord coupant et de différents diamètres légèrement inférieurs à ceux des éventuels conducteurs à dénuder.
Cet outil connu, alors qu'il est parfaitement adapté pour enlever la gaine externe des fils à un seul conducteur, s'avère tout à fait inadapté pour enlever la gaine externe d'un câble électrique à plusieurs conducteurs, isolés individuellement, du fait que l'isolant des différents conducteurs serait détérioré à la fois durant la phase de fermeture que durant la phase successive de traction de la pince, d'autant plus que les conducteurs doivent être dénudés sur une longueur inférieur à celle à enlever pour la gaine externe.

On connaît également des dispositifs communément appelés "dénudeurs pour câbles", lesquels permettent donc d'enlever la gaine externe des câbles électriques avec conducteurs isolés, mais pas l'isolant des différents conducteurs. On connaît également une pince, dénommée "pince à sertir", qui est utilisée uniquement pour écraser une extrémité des câbles dénudée séparément.

La présente invention a pour but d'éliminer les inconvénients précités et de proposer un outil qui permette de couper circulairement la gaine isolante externe d'un câble électrique à un seul conducteur et/ou à plusieurs conducteurs individuellement isolés, avec une opération simple, rapide et sûre et qui puisse être appliqué sur une pince à dénuder ou sur une pince à sertir.

Ces résultats ont été atteints conformément à l'invention en réalisant un outil comprenant un manche avec poignée; un levier à deux bras, articulé sur ledit manche, avec une extrémité en forme de berceau pour former, avec le manche, une bouche dans laquelle faire passer transversalement un câble, et avec l'autre extrémité concave pour être actionnée avec le pouce de la main qui empoigne le manche; un ressort pour rappeler le levier dans la position de fermeture de la bouche; une pointe coupante, dépassant du manche de manière à intercepter le câble maintenu dans ladite bouche en n'engageant que sa gaine externe.

Selon une forme de réalisation préférée, ladite pointe coupante est amovible pour permettre son réglage et son remplacement éventuel en fonction du diamètre du câble à traiter.

Avantageusement, ledit outil est monté sur un des manches d'une pince à dénuder ou d'une pince à sertir.

Les avantages obtenus grâce à la présente invention consistent essentiellement en ce qu'il est possible d'enlever uniquement la gaine externe des câbles électriques à plusieurs conducteurs isolés individuellement de manière simple, rapide et sûre; qu'un outil selon l'invention peut être monté avec facilité sur de simples pinces, des pinces à dénuder et des pinces à sertir; qu'il s'avère de fabrication simple et de coût réduit.

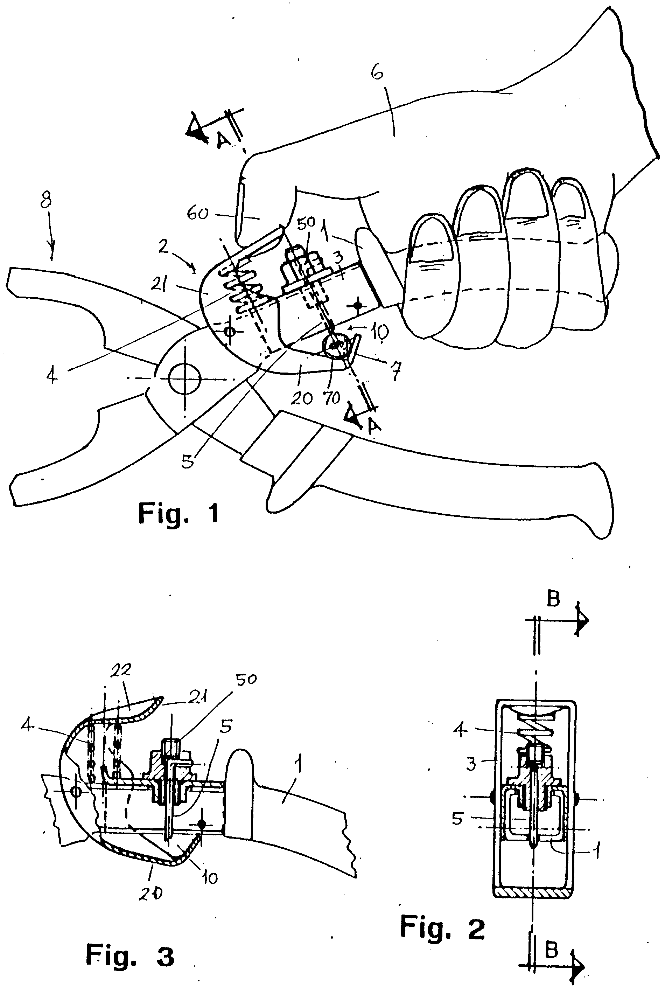

Ces avantages et caractéristiques de l'invention ainsi que d'autres seront plus et mieux compris de chaque homme du métier à la lumière de la description qui va suivre et à l'aide des dessins annexés donnés à titre d'exemplification pratique de l'invention, mais à ne pas considérer dans le sens limitatif; dessins sur lesquels la FIG. 1 représente une vue d'ensemble d'un outil conformément à l'invention, appliqué sur le manche d'une pince, dans la position d'utilisation; la FIG. 2 représente la vue en coupe suivant la ligne A-A de la Fig. 1; la FIG. 3 représente la vue en coupe suivant la ligne B-B de la Fig. 2;

Réduit à sa structure essentielle et en référence aux figures des dessins annexés, un outil pour enlever la gaine externe des câbles électriques conformément à l'invention comprend:
- un manche 1 avec une poignée tubulaire de section a peu près carrée;
- un levier 2 à deux bras 20,21 avec profil curviligne en forme de C et section creuse, lequel est enfilé et articulé sur ledit manche 2 en position avancée par rapport à la main 6 qui l'empoigne.

L'extrémité inférieure du bras 20 dudit levier 2, qui dépasse du manche 1 vers le bas, est repliée vers le haut afin de délimiter, avec le manche, une lumière ou bouche 10 dans laquelle loger transversalment et débouchant le câble 7 à traiter; l'extrémité supérieure du bras 21 qui dépasse du manche 1 vers le haut présente une fossette 22 avec sa concavité dirigée vers le haut pour coopérer avec l'extrémité du pouce 60 de la main qui empoigne le manche 1 et qui doit actionner, c'est-à-dire pousser vers le bas le levier 2;
- un ressort à compression 4, interposé entre le manche 1 et l'extrémité libre du bras 21 du levier 2, pour rappeler le bras 20 du levier 2 dans la position de fermeture de la bouche 10 avec le levier 2 au repos et respectivement, pour maintenir en place le câble 7 dans la bouche 10 pendant le traitement;
- une pointe coupante 5 fixée, débouchante dans le manche 1 duquel elle dépasse, vers le bas et réglable en hauteur avec des moyens à vis 50 de manière à intercepter un câble 7 logé dans la bouche 20 en engageant uniquement sa gaine externe 70.

Avantageusement, conformément à l'invention, ledit manche 1 est une des branches d'une pince 8, de préférence du type "pince à dénuder" ou "pince à sertir".

Le fonctionnement de l'outil est le suivant. Après avoir empoigné le manche 1 avec une main de la manière indiquée sur la Fig. 1, on appuie avec le pouce sur le sommet du levier 2 pour vaincre la force du ressort 4 et de manière à ouvrir la bouche 10 de ce qu'il faut pour faire passer le câble 7 dont la gaine doit être coupée; une fois le câble introduit et le levier 2 relâché, le ressort 4 bloque le câble dans la bouche 10; ensuite, en bloquant le câble avec une main, avec l'autre main on fait tourner le manche 1 autour du câble de manière que la pointe 5 coupe la gaine sur toute sa circonférence et sans entailler les différents conducteurs ni leur revêtement isolant. Enfin, après avoir appuyé sur le levier 2 et libéré le câble électrique 7 ainsi entaillé, il suffit de le fléchir le câble alternativement pour compléter le détachement de la partie tubulaire d'extrémité de la gaine et la retirer.

## Revendications

**1)** Outil pour enlever la gaine externe des câbles électriques caractérisé en ce qu'il comprend:
- un manche (1) avec poignée;
- un levier (2) à deux bras (20,21) avec profil curviligne en forme de C et de section creuse, articulé sur ledit manche (1), dont le bras (20) a son extrémité libre, qui dépasse vers le bas du manche (1), repliée de manière à délimiter avec le manche (1) une bouche (10) dans laquelle faire passer transversalement un câble (7) à traiter et dont le bras (21) a son extrémité libre, qui dépasse vers le haut du manche, en position avancée par rapport à la main qui empoigne le manche (1) de manière à être actionnée avec le pouce;
- un ressort (4) pour coopérer avec le levier (2) de manière à fermer la bouche (10) destinée au câble (7);
- une pointe coupante (5) fixée de manière à intercepter le câble (7) maintenu dans ladite bouche (10) en n'engageant que sa gaine externe (70).

**2)** Outil selon la revendication 1, caractérisé en ce que ledit levier (2) est articulé sur un socle (3) qui est fixé sur ledit manche (1).

**3)** Outil selon la revendication 1, caractérisé en ce que l'extrémité libre du bras (21) dudit levier (2) est concave avec la concavité dirigée vers le haut pour faciliter son actionnement avec l'extrémité du pouce de la main qui empoigne le manche (1).

**4)** Outil selon la revendication 1, caractérisé en ce que ladite pointe coupante (5) est amovible et réglable en profondeur par rapport au câble (7) présent dans la bouche (10).

**5)** Outil selon une ou plusieurs des revendications précédentes, caractérisé en ce que ledit manche (1) est un des bras d'une pince (8), spécialement du type "pince à dénuder" ou "pince à sertir".
